# EUROPEAN PATENT APPLICATION

(11) **EP 2 264 582 A1**
(43) Date of publication of application: **22.12.2010**
(21) Application number: 09163025.1
(22) Date of filing: 17.06.2009
(51) Int. Cl.: G06F 3/048

(54) **Portable electronic device and method of controlling same**

(71) Applicant: RESEARCH IN MOTION LIMITED, Waterloo, Ontario N2L 3W8 (CA)
(72) Inventor: Kwok, Jordanna, Waterloo Ontario N2L 5Z5 (CA); Zinn, Ronald Scotte, Waterloo Ontario N2L 5Z5 (CA); Bocking, Andrew Douglas, Waterloo Ontario N2L 5Z5 (CA)
(74) Representative: MERH-IP Matias Erny Reichl Hoffmann

(57) **Abstract**

A method of controlling a portable electronic device (100) that has a touch-sensitive display (118) includes displaying a representation of a user-selectable feature (302,304,306) on the touch-sensitive display, detecting the touch on the touch-sensitive display at a first location associated with the feature, and temporarily increasing a target area (308,310) of the representation after detecting the touch at the first location.

## Description

The present disclosure relates generally to a portable electronic device including a touch screen display and control of the electronic device.

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive or touchscreen devices are desirable.

### GENERAL

A method of controlling a portable electronic device that has a touch-sensitive display may comprise displaying a representation of a user-selectable feature on the touch-sensitive display, detecting the touch on the touch-sensitive display at a first location associated with the representation, and temporarily increasing a target area of the representation after detecting the touch at the first location.

A computer-readable medium has computer-readable code embodied therein that is executable by a processor of a portable electronic device to perform the above method.

A portable electronic device may comprise a touch-sensitive display configured to display a representation of a user-selectable feature and receive a touch by a user and a processor. The processor is configured to detect the touch on the touch-sensitive display at a first location associated with the representation and temporarily increase a target area of the representation after detecting the touch at the first location.

### BRIEF DESCRIPTION OF THE DRAWINGS

FIG. 1 is a block diagram of a portable electronic device in accordance with the present disclosure.

FIG. 2 illustrates sectional side views of a portable electronic device before and during application of a force to the touch-sensitive display in accordance with the present disclosure.

FIG. 3 illustrates examples of a touch-sensitive display including a target area of a user-selectable feature before and during detection of a touch.

FIG. 4 is a flowchart illustrating a method of facilitating selection of a user-selectable feature displayed on a touch-sensitive display of a portable electronic device in accordance with the present disclosure.

### DESCRIPTION OF PREFERRED EMBODIMENTS

The following describes an apparatus for and method of facilitating selection of a user-selectable feature displayed on a touch-sensitive display of a portable electronic device. The touch is detected on the touch-sensitive display, at a first location associated with the feature, and a target size of the feature is temporarily increased in response to detecting the touch at the first location. The term "target area" herein refers to the area of the touch-sensitive display that is associated with a user-selectable feature such that a touch at a location that falls within the target area results in selection of the associated user-selectable feature.

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

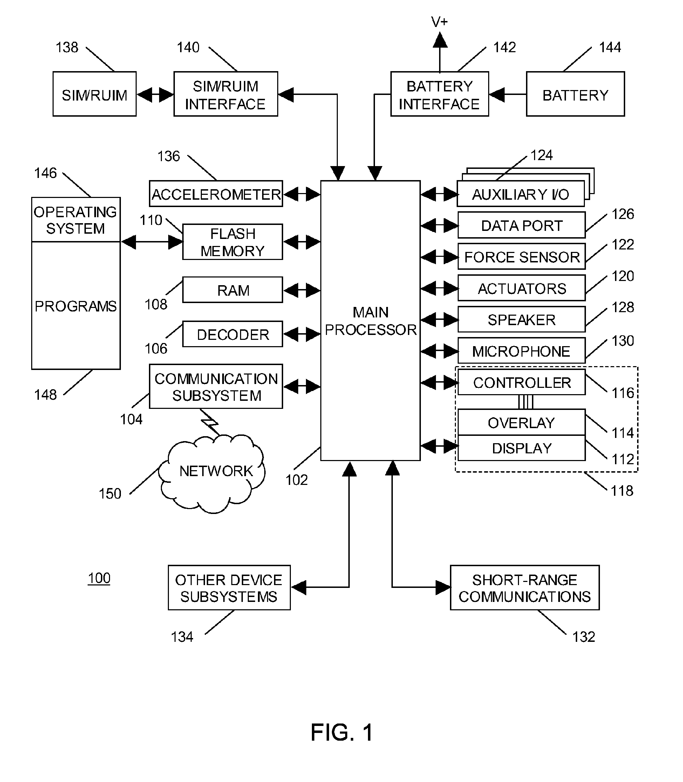

A block diagram of an example of an embodiment of a portable electronic device 100 is shown in FIG. 1. The portable electronic device 100 includes multiple components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, a flash memory 110, a display 112 with a touch-sensitive overlay 114 connected to an electronic controller 116 that together comprise a touch-sensitive display 118, an actuator 120, one or more force sensors 122, an auxiliary input/output (I/O) subsystem 124, a data port 126, a speaker 128, a microphone 130, short-range communications 132 and other device subsystems 134. User-interaction with the graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the flash memory 110.

The portable electronic device 100 also includes an operating system 146 and software components 148 that are executed by the processor 102 and are typically stored in a persistent store such as the flash memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

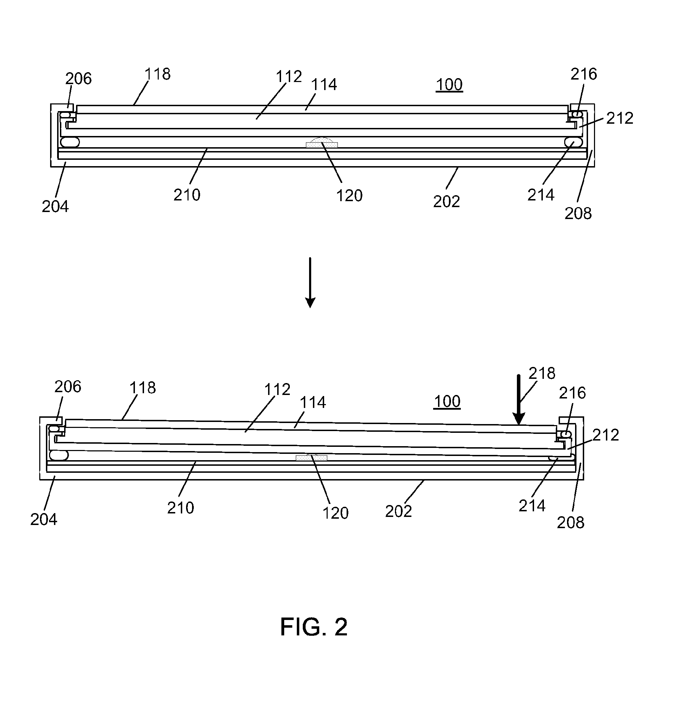

A sectional side view of a portable electronic device 100 before and during user-application of a force to the touch-sensitive display 118 is shown in FIG. 2. The portable electronic device 100 includes a housing 202 that encloses internal components such as shown in FIG. 1. The housing 202 may include a back 204, and a frame 206 that is spaced from the back 204 and frames the touch-sensitive display 118. Sidewalls 208 extend between the back 204 and the frame 206. A base 210 extends between the sidewalls 208, generally parallel to the back 204, and supports the actuator 120. The display 112 and the overlay 114 are supported on a support tray 212 of suitable material, such as magnesium, and the support tray 212 is biased away from the base 210, toward the frame 206 by biasing elements 214, such as gel pads, between the support tray 212 and the base 210. Compliant spacers 216, which may also be gel pads, for example, may be located between the support tray 212 and the frame 206. The touch-sensitive display 118 is moveable within the housing 202. As the touch-sensitive display 118 is moved toward the base 210, the biasing elements 214 are compressed, and when sufficient force is applied, the actuator 120 is depressed or actuated. The touch-sensitive display 118 may also pivot within the housing to depress the actuator 120. As shown in the lower part of FIG. 2, a force 218 applied to one side of the touch-sensitive display 118 moves the display 188 toward the base 210, causing compression of the biasing elements 214 on that side of the touch-sensitive display 118, and depressing the actuator 120. The actuator 120 may be actuated by pressing anywhere on the touch-sensitive display 118. The processor 102 receives a signal when the actuator 120 is depressed or actuated. For a mechanical dome switch/actuator, tactile feedback is provided when the dome collapses due to imparted force and when the dome switch/actuator returns to the rest position after release of the switch. Although a single actuator is shown, any suitable number of actuators may be utilized and may be located in any suitable position.

Optionally, the actuator 120 may comprise one or more piezoelectric actuators between the base 210 and the support tray 212 for providing tactile feedback to the user. Each piezo actuator includes a piezoelectric device, such as a piezoelectric (PZT) ceramic disk adhered to a metal substrate such that the metal substrate bends when the PZT disk contracts diametrically, as a result of build up of charge at the PZT disk. When the charge reaches a predetermined amount, the charge may advantageously be removed over a relatively short period of time to provide tactile feedback to the user. The charge on the piezo actuator may be removed by a controlled discharge current that causes the PZT disk to expand, thereby releasing the force caused by the electric charge and decreasing the force on the touch-sensitive display 118 applied by the piezo actuators.

The touch-sensitive display 118 is configured to display information, including representations of user-selectable features, such as user-selectable buttons or icons for opening or launching an application or for selection of an option or options within an application. The touch-sensitive display 118 is also configured to receive and detect a touch on the touch-sensitive display 118.

When a touch is detected, the location of the touch on the touch-sensitive display 118 is determined. Each application typically includes at least one map of locations associated with user-selectable features or options displayed for the application. The map of locations includes a target area on the touch-sensitive display 118 for each representation of a user-selectable feature, such that when a touch is detected and the location of the touch is determined to fall within the target area, the associated feature is selected. Selection of the feature may advantageously be confirmed when the actuator 120 is actuated, as described above, to thereby cause the portable electronic device to perform the associated function. Thus, to select and confirm selection of a feature, the user presses on the touch-sensitive display 118 at a location that falls within the target area with sufficient force to actuate the actuator 120.

When the user touches the touch-sensitive display 118 and applies sufficient force to actuate the actuator 120, the detected touch location may shift from the first location where the touch is first detected to a second location when force is applied to the touch-sensitive display 118, for example, when the actuator 120 is actuated. This shift may be caused by many factors including, for example, the shape of the finger, unintentional movement or rolling of the finger to one side, and/or movement of the touch-sensitive display 118. Because a touch-sensitive display 118 on a portable electronic device 100 is typically relatively small, the user-selectable features rendered on the touch-sensitive display 118 and the respective target areas are also small. To facilitate confirmation of selection of such a feature, the size of the target area on the touch-sensitive display 118 for the representation of the user-selectable feature is temporarily increased after a touch is detected at a location that falls within the original target area and/or, when applicable, after detection of confirmation of selection. The display size of the representation of the user-selectable feature may be maintained as constant, i.e., preserved. The size of the target area is increased after confirmation of selection for the representation of the feature touched prior to confirmation. The touch location at the time of confirmation of selection may not fall within the original target area. The increase in the size of the target area facilitates more accurate confirmation of selection. A slight shift from a first location that falls within the original target area to a second location outside the original target area, but within the target area of increased size results in a selection of the feature associated with the original target area. Selection is therefore confirmed even when a slight shift occurs from a touch location that falls inside the original target area upon detection of the touch to a touch location that falls outside the original target area, but inside the target area of increased size, thereby speeding up and/or more accurately facilitating the selection and confirmation process.

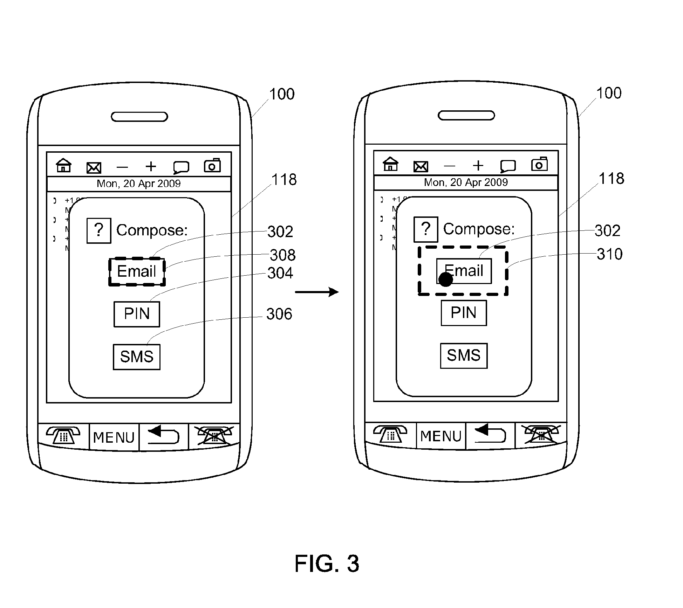

Examples of a touch-sensitive display 118 illustrating a target area of a user-selectable feature before and during detection of a touch are shown in FIG. 3. The portable electronic device 100 is shown in the process of selecting a messaging application from a selection interface for composing an electronic message. The selection interface may be provided in response to selection of an option to compose an electronic message from, for example, a menu list of options. For the purpose of this example, three user-selectable features in the form of virtual buttons are rendered in a message application selection interface. These virtual buttons include an "Email" button 302, a "PIN" button 304 and a "SMS" button 306. A respective target area is associated with each of the virtual buttons 302, 304, 306. Selection and confirmation of any one of the "Email" button 302, the "PIN" button 304, and the "SMS" button 306 causes the portable electronic device 100 to execute a respective application and provide a respective message composition interface.

The target area of each of the virtual buttons 302, 304, 306 is generally the same as the display area of each of the buttons. A touch in the displayed "Email" button 302 area is determined to fall within the associated target area 308 (illustrated by a dashed line) of the "Email" button. A touch may be detected and determined to fall within a target area of one of the virtual buttons, such as the target area 308 of the "Email" button. After a touch is detected and/or confirmation of selection is received, the target area is increased to provide an expanded or temporarily increased target area 310. The target area 308 may be increased in size to provide the expanded target area 310 by moving the boundary outwardly from the center by a predetermined distance. The expanded target area 310 may optionally be expanded by different amounts from different borders of the original target area 308. Further, the expanded target area may partially overlap one or more neighboring buttons 304. For the purpose of this example, the size of the displayed "Email" button 302 is preserved when the expanded target area 310 is provided. A touch that does not fall on the displayed "Email" button 302 upon confirmation of selection may fall within the expanded target area 310.

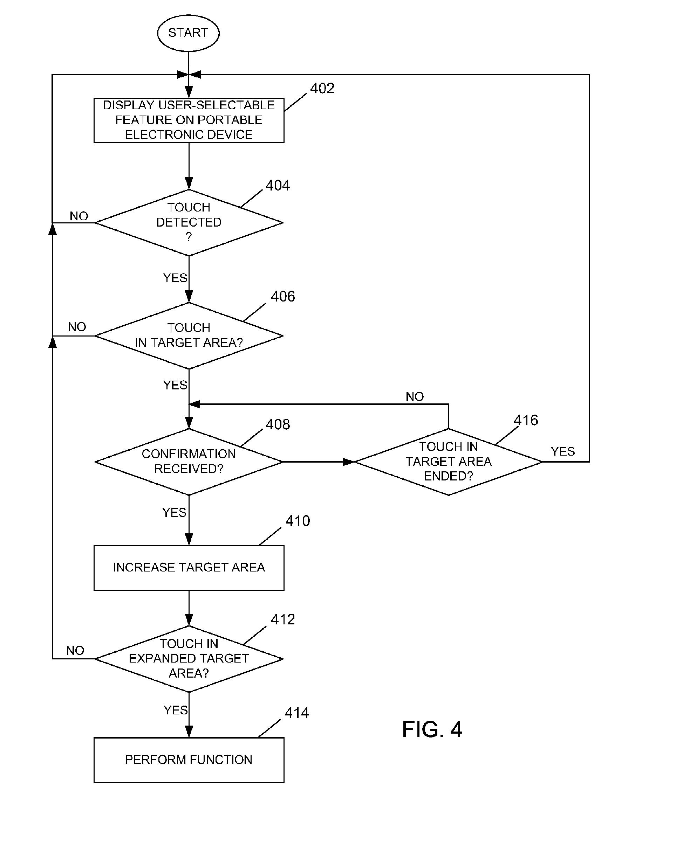

FIG. 4 is a flowchart illustrating a method of facilitating selection of a user-selectable feature displayed on a touch-sensitive display of a portable electronic device 100. The flowchart is advantageously performed by the processor 102 performing stored instructions from a computer-readable medium, such as described above. A representation of a user selectable feature, such as the button 302, is displayed 402 on the touch-sensitive display 118 of the portable electronic device 100. When a touch is detected 404, a first touch location is determined. When the first touch location is determined 406 to fall in the target area 308 for the feature, it may optionally be determined 408 if confirmation of selection is received. If confirmation of selection is not received, it is determined 416 if the touch has ended. If the touch has not ended, the process continues with step 408. If the touch has ended, the process continues with step 402. When a touch in the target area is detected and/or confirmation of selection is received 408, as appropriate, the size of the target area 308 is temporarily increased 410 to provide the expanded target area 310. When the touch location, at the time of the touch and/or the time confirmation is received, is detected 412 within the expanded target area 310, the function associated with the target area 302 is performed 414, otherwise the process continues with step 402.

The control of the portable electronic device for temporarily increasing the target area of a representation of a user-selectable feature facilitates more accurate selection of the feature on the touch-sensitive display. A touch contact point may shift slightly from a first location to the time when selection occurs, such as the end of the touch and/or when the confirmation of selection is received. The increase in target area facilitates selection of the feature during application of force and in other conditions, facilitating more accurate confirmation of selection when the touch contact point shifts, inadvertently or otherwise, to a location slightly outside the original target area. Thus, selection may be made more accurately and quickly, thereby decreasing power requirements and increasing battery life.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method of controlling a portable electronic device comprising:
displaying a representation of a user-selectable feature on a touch-sensitive display of the portable electronic device;
detecting a touch on the touch-sensitive display at a first location associated with the representation; and
temporarily increasing a target area of the representation after detecting the touch at the first location.

2. The method according to claim 1, further comprising detecting confirmation of selection, and wherein the target area is temporarily increased in response to detecting confirmation of selection.

3. The method according to claim 2, comprising determining that the touch is at a second location on the touch screen display when the confirmation of selection is detected.

4. The method according to claim 3, comprising determining if the second location falls within the temporarily increased target area.

5. The method according to claim 4, comprising performing a function associated with the feature when the second location falls within the temporarily increased target area.

6. The method according to any one of claims 2 to 5 wherein detecting the confirmation of selection comprises receiving input from an actuator, or, receiving input from an actuator actuated by depression of the touch-sensitive display.

7. The method according to any one of claims 1 to 6, wherein a displayed size of the representation is preserved when the target area is increased.

8. A computer-readable medium having computer-readable code embodied therein, the computer-readable code executable by a processor of a portable electronic device to perform the method according to any one of claims 1 to 7.

9. A portable electronic device comprising:
a touch-sensitive display configured to display a representation of a user-selectable feature and receive a touch by a user; and
a processor configured to:
detect the touch on the touch-sensitive display at a first location associated with the representation; and
temporarily increase a target area of the representation after detecting the touch at the first location.

10. The portable electronic device according to claim 9, wherein the processor is configured to detect confirmation of selection and the target area is temporarily increased in response to detecting confirmation of selection.

11. The portable electronic device according to claim 10, wherein the processor is configured to determine that the touch is at a second location when the confirmation of selection is detected.

12. The portable electronic device according to claim 11, wherein the processor is configured to perform a function associated with the feature when the second location falls within the temporarily increased target area.

13. The portable electronic device according to any one of claims 9 to 12, comprising an actuator for providing the confirmation of selection.

14. The portable electronic device according to claim 13, wherein the actuator is actuated by depression of the touch-sensitive display.

15. The portable electronic device according to any one of claims 9 to 14, wherein a displayed size of the representation is preserved when the target size is increased.

## Amended claims

### Amended claims in accordance with Rule 137(2) EPC.

**1.** A method of controlling a portable electronic device (100) comprising:
displaying a representation of a selectable feature on a touch-sensitive display (118) of the portable electronic device (100);
detecting a touch on the touch-sensitive display (118) at a first location associated with the representation; and
temporarily increasing a target area of the representation in response to detecting confirmation of selection of the selectable feature;
detecting that the touch has moved to a second location on the touch-sensitive display (118); and
performing a function associated with the selectable feature when the second location falls within the temporarily increased target area.

**2.** The method according to claim 1, wherein detecting the confirmation of selection comprises receiving input from an actuator, or, receiving input from an actuator actuated by depression of the touch-sensitive display.

**3.** The method according to claim 1 or claim 2, wherein a displayed size of the representation is preserved when the target area is increased.

**4.** A computer-readable medium having computer-readable code embodied therein, the computer-readable code executable by a processor of a portable electronic device (100) to perform the method according to any one of claims 1 to 3.

**5.** A portable electronic (100) device comprising:
a touch-sensitive display (118) configured to display a representation of a selectable feature and detect a touch on the touch-sensitive display (118); and
a processor (102) configured to:
detect the touch on the touch-sensitive display (118) at a first location associated with the representation;
temporarily increase a target area of the representation in response to detecting confirmation of selection of the selectable feature;
detect that the touch has moved to a second location on the touch-sensitive display (118); and
perform a function associated with the selectable feature when the second location falls within the temporarily increased target area.

**6.** The portable electronic device (100) according to claim 5, comprising an actuator (120) to provide the confirmation of selection.

**7.** The portable electronic device (100) according to claim 6, wherein the actuator (120) is actuated by depression of the touch-sensitive display (118).

**8.** The portable electronic device (100) according to claim 6 or claim 7, wherein a displayed size of the representation is preserved when the target size is increased.
